(19) Europäisches Patentamt / European Patent Office / Office européen des brevets

(11) **EP 1 867 617 A1**

(12) **EUROPEAN PATENT APPLICATION**

(43) Date of publication:
**19.12.2007 Bulletin 2007/51**

(51) Int Cl.:
*C04B 35/50* (2006.01)   *C04B 35/505* (2006.01)
*G02B 1/00* (2006.01)   *G02C 7/02* (2006.01)

(21) Application number: **07011364.2**

(22) Date of filing: **11.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **14.06.2006 DE 102006027958**

(71) Applicant: **Schott AG**
**55122 Mainz (DE)**

(72) Inventors:
- **Kron, Günther, Dipl.-Ing.**
  **55128 Mainz (DE)**

- **Peuchert, Ulrich, Dr.**
  **55294 Bodenheim (DE)**
- **Hayden, Joseph S.**
  **Clarks Summit**
  **PA 18411 (US)**
- **Weinhold, Carsten**
  **Scranton, 18510 Pennsylvania (US)**
- **Menke, Yvonne, Dr.**
  **55130 Mainz (DE)**
- **Okano, Yoshio, Dr.**
  **55122 Mainz (DE)**

(74) Representative: **Fuchs**
**Söhnleinstrasse 1**
**65201 Wiesbaden (DE)**

(54) **Opto-ceramics, optical elements prepared therefrom as well as mapping optics**

(57) The present invention relates to opto-ceramics and refractive, transmittive or diffractive optical elements prepared therefrom. These opto-ceramics and optical elements are transmittive for visible light and/or for infrared radiation. The opto-ceramics consist of a crystal combination wherein the single crystallites have a cubic structure of the type $Y_2O_3$, comprising alternatively an oxide, selected from the group consisting of $In_2O_3$ or $Yb_2O_3$, or a mixture of two or more oxides of the type $X_2O_3$, wherein X is selected from the group consisting of Y, Lu, Sc, Yb, In, Gd and La.

Also mixtures of $X_2O_3$ with oxides having a different stoichiometry, such as zirconium and hafnium oxide are possible, as long as the cubic structure of the ceramic will be maintained.

The optical elements which may be prepared from said opto-ceramics are particularly suitable for use in mapping optics, such as for example objectives having reduced chromatic aberrations, in particular with approximately apochromatic mapping behaviour. The optical elements of the opto-ceramic according to the present invention may be applied in lens systems in combination with lenses of glass, but also with other ceramic lenses, in particular also in digital cameras, mobile phone cameras, in the field of microscopy, microlithography, optical data storage or other applications in the field of "consumer" or industry applications.

Figure 1

**Description**

The present invention relates to opto-ceramics and refractive, transmittive or diffractive optical elements prepared therefrom. These opto-ceramics and optical elements are transmittive for visible light and/or for infrared radiation. The opto-ceramics consist of a crystal combination wherein the single crystallites have a cubic structure of the type $Y_2O_3$, comprising alternatively the oxide $In_2O_3$, or a mixture of two or more oxides of the type $X_2O_3$, wherein X is selected from the group consisting of Y, Lu, Sc, Yb, In, Gd and La.

Also mixtures of $X_2O_3$ with oxides having a different stoichiometry such as zirconium and hafnium oxide are possible, as long as the cubic structure of the ceramic will be maintained.

In the following the ceramic is also referred to as opto-ceramic. According to the present invention, an opto-ceramic (or ceramic) is, as mentioned above, highly transparent, poly crystalline single phase material comprising an oxide. Opto-ceramics are to be understood as a particular sub group of a ceramic. "Single phase" means that more than 95 % by weight, preferably at least 97 % by weight and more preferably 99 % by weight and most preferred 99.5 to 99.9 % by weight are in the crystalline form of the intended composition.

The optical elements which may be prepared from said opto-ceramics are particularly suitable for use in mapping optics, such as for example objectives having reduced chromatic aberrations, in particular with approximately apochromatic mapping behaviour. The optical elements of the opto-ceramic according to the present invention may be applied in lens systems in combination with lenses of glass, but also with other ceramic lenses, in particular also in digital cameras, mobile phone cameras, in the field of microscopy, microlithography, optical data storage or other applications in the field of consumer or industry applications.

**Background of the invention**

The main target in the development of mapping optics is to attain a sufficient optical quality with a compact set-up of the optic which is as light as possible. In particular for applications in the field of digital image detection in electronic apparatuses, such as for example digital cameras, objectives of mobile phones and the like, the mapping optic has to be constructed very small and lightweight. In other words, the total amount of lenses has to be minimal. This requires transparent materials with high refractive index and a dispersion which is as low as possible to thus allow the design of very compact mapping optics having approximately apochromatic mapping behaviour.

In the case of microscopy, nearly diffraction-limited mapping optics are necessary, for the ocular as well as the objective.

In the field of defence, transparent optics are required which have high transmittance in the visible (380 to 800 nm) and also the infrared spectral range, up to 8,000 nm, ideally up to 10,000 nm and, in addition, which are resistant against influences from outside, such as mechanical action, shock, temperature, change of temperature, pressure etc.

For many other technologies the same applies, such as for example for digital projection and further display techniques. But also in predominantly monochromatic applications, such as the optical storage technologies, compact systems can be realized by means of materials having high refractive index.

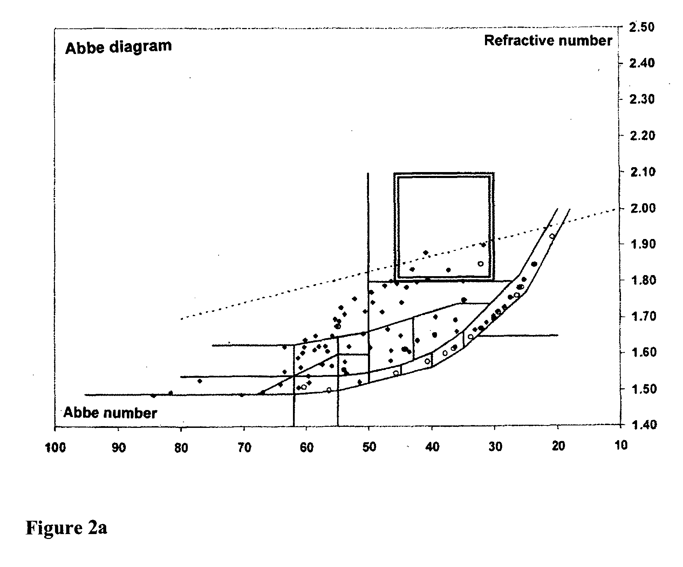

At the moment, the development of mapping optics is limited by the optical parameters of the available materials. By the available techniques of glass melting and glass forming, only such kinds of glasses having high quality can be produced which are in an Abbe diagram plotting the refractive number against the Abbe number below a line which approximately passes through the points Abbe number = 80/refractive index = 1.7 and Abbe number = 10/refractive index = 2.0. This imaginary line is shown in Fig. 2a by a dotted line. In more detail, glasses having a refractive index of between about 1.9 and about 2.2 and an Abbe number in a range of between about 30 and 40 tend to instability, so that it is very difficult to produce such glasses in higher amounts and with sufficient quality. Also glasses having a refractive index of between about 1.8 and about 2.1 and an Abbe number in a range of between about 30 and 55 tend to instability.

The definitions of refractive index (refractive number) $n_d$, Abbe number $\nu_d$ and relative partial dispersion (for example $P_{g,F}$) are in principle well known by a person skilled in the art and may be defined in more detail by the means of specialized literature. In the sense of the present invention, the terms are used according to the definitions in "The properties of optical glass; Bach, Hans; Neuroth, Norbert (Ed.), Berlin (i.a.): Springer, 1995. - (Schott series on glass and glass ceramics: science, technology, and applications; 1); XVII, 410 p. - 2., corr. print., 1998, XVII, 414 p.".

In addition to refractive number and Abbe number, the relative partial dispersion plays an important role in the selection of an optical material. If it is desired to prepare approximately apochromatic optics, the combination of materials having approximately the same relative partial dispersion, but a high difference in the Abbe number is necessary. If the partial dispersion $P_{g,F}$ is plotted against the Abbe number (Figure 2b), most glasses are on one line ("normal line"). Therefore materials are desired having a behaviour with a different combination of Abbe number and relative partial dispersion.

At the moment, materials which are above the before mentioned imaginary line in an Abbe diagram are exclusively single crystals or polycrystalline materials. However, the production of single crystals by means of the known crystal-pulling processes is extremely costly and has enormous limitations with respect to the chemical composition. Furthermore, for most applications crystals cannot be produced close to the final format, so that this results in an enormous effort of post-processing. Although polycrystalline ceramics can be produced with a broader range of compositions, normally they have insufficient optical qualities, in particular with respect to the homogeneity of the refractive index and the transparency. Till today, only few ranges of compositions and structure types are known, in which transparent ceramics having sufficient optical quality can be produced.

Therefore, polycrystalline ceramics have only been used in limited extent in optical applications till today. Thus for example, the Japanese Patent Publication JP 2000-203933 discloses the production of polycrystalline YAG by means of a special sintering process. Recently, also the production of polycrystalline YAG of optical quality as a laser host material has been achieved, for example for doping with laser-active ions, such as for example Nd.

In US Patent 6,908,872 a translucent ceramic is described which uses barium oxide as an oxide which has to be present in the ceramic. The thus obtained ceramics have a perovskite structure and are para-electric. However, ceramics containing such barium-containing phases having perovskite structure often have an insufficient optical mapping quality. This is a result of the tendency of many perovskites to form distorted ferro-electric crystal structures and thus to loos their optical isotropy. *Inter alia,* this results in undesired double refraction of the crystals, from which the ceramic is built, and, in addition, the transmittance in the range of blue light (about 380 nm) is insufficient.

US 3,640,887 describes the production of opto-ceramics on the basis of cubic oxides of the stoichiometry $X_2O_3$ ("sesquioxides"). In an exemplary way, only optically active oxides are mentioned which are coloured owing to absorption bands in the visible (range of wave lengths of ca. 380 nm to 800 nm). As a sintering aid, *i.a.,* $ThO_2$ is used. This one is not desired due to toxicity respectively radioactivity. The like belongs to US 3,545,987.

US 4,761,390 relates to a cover plate which substantially consists of a $Y_2O_3$ ceramic.

Also US 4,755,492 describes a transparent ceramic $Y_2O_3$ as well as its production from powders which itself are produced by oxalate precipitation processes. The applications relate to discharging vessels for high pressure discharge lamps.

US 4,098,612 describes transparent ceramics of mixed oxides of $Y_2O_3$ and $Al_2O_3$ for discharging vessels. $Al_2O_3$ may be contained in an amount of up to 5 % by weight which results in the absence of a cubic structure. The like belongs to transparent ceramic $Y_2O_3$ having high contents of $La_2O_3$ from US 4,147,744. US 4,571,312 as well as US 4,747,973 describe opto-ceramics of the system $Y_2O_3$-$Gd_2O_3$ which, doped with lanthanides being optically active in the UV-VIS (ultraviolet-visible range), are used as optically active scintillator materials for medicine technique.

JP 2003-128465 respectively WO 06/03726 describe the production of opto-ceramics on the basis of $Sc_2O_3$ respectively $Lu_2O_3$. To them are added optically active additives and thus, they are of interest for laser systems.

US 2006-061880 respectively US 2006-062569 describe the combination of optical mapping systems consisting of at least one lens of ceramic and additional lenticular components of glass, but the advantageous effect of the ceramic (owing to e.g. a convenient dispersion behaviour) for the whole system is not mentioned. The ceramic lens with extremely high refractive index ($n_d$ = 2.08) is in direct contact with a glass lens ($n_d$ = 1.62). Particular and thus costly measures have to be taken to avoid the problem of light scattering associated with the high difference in $n_d$. Thus e.g. in US 2006-062569, the ceramic lens has to be connected with a glass lens, as well as the light scattering has to be reduced respectively distributed homogenously over the image detector by a special arrangement of this glass-ceramic-putty member in the optical mapping system.

## Summary of the invention

The object of the present invention is to provide a material having a high refractive index, a high Abbe number and/or an excellent, special relative partial dispersion, which parameters cannot be achieved with conventional glasses, single crystal materials or polycrystalline ceramics respectively materials. According to a further aspect of the present invention, further an optical element of the mentioned material should be provided which preferably has a high transparency in the visible and/or the infrared range of wave lengths. According to a further aspect of the present invention, a mapping optic with an optical element which is formed of such a material should be provided. According to a further aspect of the present invention, in particular a mapping optic with approximately apochromatic mapping behaviour should be provided.

Transparency in the visible means an internal transmittance (i.e. the light transmittance minus reflection losses) which is, within a window having a width of at least 200 nm, for example within a window of 400 to 600 nm, a window of 450 to 750 nm or preferably a window of 400 to 800 nm, in the range of the visible light having wave lengths of 380 nm to 800 nm, higher than 70 %, preferably > 80 %, more preferably > 90 %, particularly preferably > 95 %, at a layer thickness of 2 mm, preferably even at a layer thickness of 3 mm, particularly preferably at a layer thickness of 5 mm.

Transparency in the infrared means an internal transmittance (i.e. the light transmittance minus reflection losses) which is, within a window having a width of at least 1,000 nm, for example within a window of 1,000 to 2,000 nm, a window of 1,500 to 2,500 nm or preferably a window of 3,000 to 4,000 nm, in the range of the infrared light having wave lengths of 800 nm to 5,000 nm, higher than 70 %, preferably > 80 %, more preferably > 90 %, particularly preferably > 95 %, at a layer thickness of 2 mm, preferably even at a layer thickness of 3 mm, particularly preferably at a layer thickness of 5 mm.

Ideally, the material has within a window of wave lengths of more than 200 nm between 5,000 nm and 8,000 nm at a thickness of 3 mm a transmittance (incl. reflection losses) of more than 20 %.

These and other objects are solved according to the present invention by the opto-ceramics according to claim 1 as well as by optical elements according to claim 10 and a mapping optic having the features according to claim 11. Additional advantageous embodiments are the subject matter of the dependent claims.

The opto-ceramics according to the present invention are prepared by sintering of at least one oxide or a mixture of oxides of the type $X_2O_3$. Insofar the oxide is in pure form, X is In.

If a mixture of two or more oxides of the type $X_2O_3$ is present, X is selected from the group consisting of Y, Lu, Sc, Yb, In, Gd and La.

In this case it is essential, that the ratios of the components of the mixture are chosen such that the cubic structure type of the type $Y_2O_3$ is maintained. In the sense of the invention, a ceramic having cubic structure means a ceramic which consists of a crystal combination wherein the individual crystallites have a cubic structure. Preferably, the material consists of a cubic phase of more than 95 %, further preferably > 98 %, even more preferably > 99 %.

Mixtures of the above described oxides of the type $X_2O_3$ with oxides of other stoichiometry, such as that of zirconium respectively hafnium, are also suitable as materials for the opto-ceramics according to the present invention, wherein here also the amount of the additives $ZrO_2$ respectively $HfO_2$ is chosen such that the cubic structure of the type $Y_2O_3$ of the ceramic is maintained. Preferably, the cubic crystals are packed as dense as possible as in a structure without imperfection.

All mixed crystal phases have a cubic crystal structure which is isotypic to that of pure $Y_2O_3$.

As mentioned above, the present invention also comprises pure oxides of the type $X_2O_3$ which have the cubic crystal structure analogous to that of $Y_2O_3$, namely $In_2O_3$ and $Yb_2O_3$.

The crystallites, from which the polycrystalline opto-ceramics are composed of, have cubic crystal structure. This results in isotropic optical behaviour without double refraction. They have dielectric behaviour, i.e. because of their cubic structure there are no permanent dipoles, and the material has the property of optical isotropy. The single crystallites are, as mentioned above, packed as dense as possible and regarding the theoretic densities values of at least 99 %, preferably at least 99.9 % and more preferred at least 99.99 % can be achieved. Hence, the ceramics according to the invention (opto-ceramics) nearly do not comprise any pores.

According to a further aspect of the present invention which may also be independently claimed, there is provided a mapping optic with lenses of at least two different transparent materials, wherein at least one lens consists of an optical ceramic respectively is formed from that, as described above. Therefore, the invention is based on the finding that novel mapping properties can be provided by the use of two different transparent materials in one mapping optic, such as for example an objective. In particular, one aspect is also the possibility of achromatisation of the mapping optic with a relatively low number of refractive optical elements which cannot be realized with known glass kinds. For example in this case, there is contemplated the use of only three refractive optical elements in total for forming an objective having approximately apochromatic mapping properties. Overall, according to the present invention compact mapping optics having very low weight, low construction depth and with low costs for colour correction compared with the use of multi lens systems according to prior art may thus be achieved.

In this case, according to a further aspect of the present invention the lenses may have pure refractive behaviour. The lenses may be arranged singly or with distances between them. Few of the lenses may in principle also be summarized to a group of lenses, for example as duplet of lenses, triplet of lenses etc.

According to a further alternative aspect of the present invention, at least one of the lenses may also have diffractive structures which are for example stamped respectively pressed onto or written into the surface of the lens or a volume of the lens, for example in the form of Fresnel zone plates, diffraction gratings and also blazed diffraction gratings.

According to a further preferable embodiment, the mapping optic comprises at least one lens of a glass; thus the mapping optic comprises a lens of the transparent opto-ceramic, as described above, and a lens of a glass which is adjusted to that.

According to a further aspect of the present invention, in this case the relative partial dispersions ($P_{g,F}$) of the respective glass and the ceramic are approximately similar to one another; preferably the difference between them is less than about 10 %, wherein the difference of the Abbe numbers of the respective glass and the ceramic is higher than 10, preferably higher than 20. Approximately apochromatic mapping properties of the mapping optic may be achieved by simultaneously providing a comparatively high difference between the Abbe numbers with substantially identical relative partial dispersion.

In the following, the invention will be described in exemplary way and with reference to the accompanying figures from which further features, advantages and objects to be solved will follow.

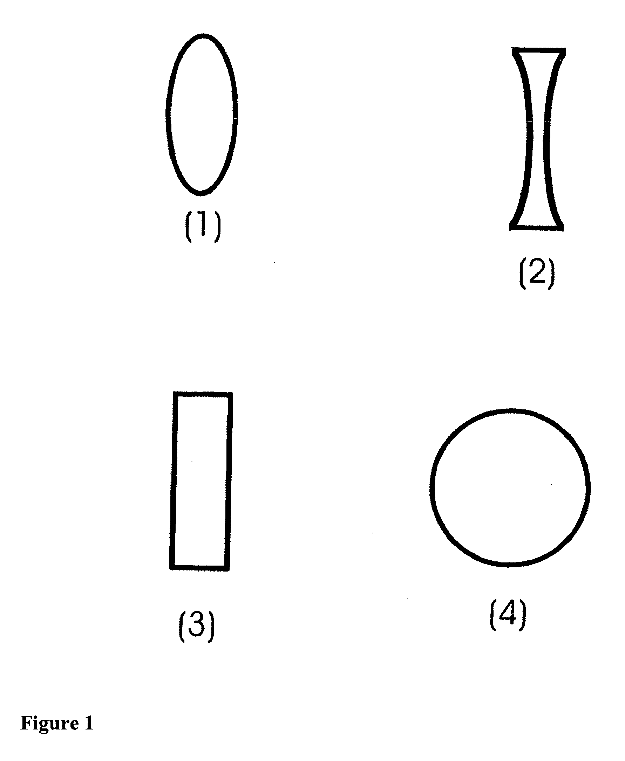

Fig. 1    shows four examples for optical elements which can be produced from the optoceramics according to the present invention;

Fig.　　2a presents an Abbe diagram wherein the properties of different glasses and optoceramics according to the present invention are summarized;

Fig. 2b　is a diagram which summarizes the relation of the positions (relative partial dispersion against Abbe number) of glasses and optoceramics according to the present invention;

Fig. 3　shows a mapping optic according to an embodiment example of the present invention.

Fig. 4　shows a compact image detection facility with a mapping optic according to Fig. 3.

Detailed description of preferred embodiment examples:

In the Abbe diagram according to Fig. 2a, points marked with a circular symbol represent in an exemplary way kinds of glasses which can be prepared in high optical quality by the glass melting techniques which are available today. As is clearly obvious from Fig. 2a, with the present techniques of glass melting and glass forming glasses which are above the dotted line which passes through the points Abbe number = 80/refractive index = 1.7 and Abbe number = 10/refractive index = 2.0 can only be produced with limitations. In particular, glasses having a refractive index in the range of between 1.85 and 2.1 in combination with an Abbe number of between about 30 and 45 are instable (see rectangle in Fig. 2a). As explained below, the opto-ceramics according to the present invention are transparent ceramics which have a refractive index of between about 1.85 and 2.0 and which have simultaneously an Abbe number in the range of between about 30 and 45. This provides the possibility of using novel material combinations for achromatisation of lens systems.

In the diagram according to Fig. 2b, the Abbe number of various glasses and single crystalline materials are plotted against the relative partial dispersion $(P_{g,F})$. As can be clearly seen in Fig. 2b, the combination of an Abbe number of between about 30 and 42 and a relative partial dispersion of between about 0.56 and 0.58 cannot be achieved with glasses (see rectangle in Fig. 2b).

As set forth below in more detail, according to the present invention opto-ceramics with Abbe numbers and relative partial dispersions in the above mentioned parameter ranges can be produced. This provides the possibility of using novel material combinations for achromatisation and/or apochromatisation of lens systems, wherein the opto-ceramics according to the present invention are formed as optical elements.

Within the composition range, different excellent mixtures of the oxides result in cubic phases which are particularly suitable for the production of an opto-ceramic according to the present invention. So for example, mixtures of at least two oxides of the type $X_2O_3$, wherein X is selected from the group consisting of Y, Lu, Sc, Yb, In, Gd and La, have good properties.

Preferred mixtures are yttrium oxide with lutetium oxide, yttrium oxide with scandium oxide, yttrium oxide with indium oxide, lutetium oxide with scandium oxide, lutetium oxide with ytterbium oxide, lutetium oxide with indium oxide, lutetium oxide with gadolinium oxide, lutetium oxide with lanthanum oxide, scandium oxide with ytterbium oxide, scandium oxide with indium oxide, scandium oxide with gadolinium oxide, scandium oxide with lanthanum oxide, ytterbium oxide with indium oxide, ytterbium oxide with gadolinium oxide, ytterbium oxide with lanthanum oxide, indium oxide with gadolinium oxide, indium oxide with lanthanum oxide, yttrium oxide with ytterbium oxide, wherein ytterbium oxide is present in an amount of higher than 20 % by mol, yttrium oxide with gadolinium oxide, wherein gadolinium oxide is present in an amount of higher than 20 % by mol, yttrium oxide with lanthanum oxide, wherein lanthanum oxide is present in an amount of higher than 10 % by mol.

More preferred mixtures are of, yttrium oxide with scandium oxide, yttrium oxide with indium oxide, lutetium oxide with scandium oxide, lutetium oxide with indium oxide, lutetium oxide with gadolinium oxide, lutetium oxide with lanthanum oxide, scandium oxide with ytterbium oxide, scandium oxide with indium oxide, scandium oxide with gadolinium oxide, scandium oxide with lanthanum oxide, ytterbium oxide with indium oxide, ytterbium oxide with gadolinium oxide, ytterbium oxide with lanthanum oxide, indium oxide with gadolinium oxide, indium oxide with lanthanum oxide, yttrium oxide with gadolinium oxide, wherein gadolinium oxide is present in an amount of higher than 20 % by mol, yttrium oxide with lanthanum oxide, wherein lanthanum oxide is present in an amount of higher than 10 % by mol.

The proportions of the amounts of the individual oxides depend on the stability of the cubic basis phase. So for example $Gd_2O_3$ can be doped into $Yb_2O_3$ or $Lu_2O_3$ in a maximum amount of ca. 80 % by mol, but into $Y_2O_3$ in a maximum amount of only up to ca. 70 % by mol. Above these values, the crystal structure is formed as a monoclinic crystal system with low symmetry which is not desired according to the present invention. $La_2O_3$ can be doped into $Yb_2O_3$, $Lu_2O_3$ or $Y_2O_3$ in a maximum amount of 20 % by mol. Also the oxides of other stoichiometries (such as zirconium and hafnium oxide) can be added, as long as the cubic structure is maintained.

Preferable for the opto-ceramics according to the present invention are the following mixtures, based on the oxides each:

Y-Lu, Y-Sc, Y-In;
Lu-Sc, Lu-Yb, Lu-In, Lu-Gd, Lu-La;
Sc-Yb, Sc-In, Sc-Gd, Sc-La;
Yb-In, Yb-Gd, Yb-La;
In-Gd, In-La.

Possible are also mixtures of yttrium oxide with ytterbium oxide, wherein ytterbium oxide is present in an amount of higher than 20 % by mol, preferably higher than 30 % by mol and further preferably higher than 40 % by mol; yttrium oxide with gadolinium oxide, wherein gadolinium oxide is present in an amount of higher than 20 % by mol, preferably higher than 30 % by mol and further preferably higher than 40 % by mol; yttrium oxide with lanthanum oxide, wherein lanthanum oxide is present in an amount of higher than 10 % by mol, preferably higher than 20 % by mol.

Alternatives with three or more than three oxide constituents are also possible.

The oxides which can be used according to the present invention form compounds which normally do not have any optical activity in the visible spectral range, i.e. at ca. 380 to 800 nm, i.e. light in this wave length range is neither absorbed nor emitted. Substantially, the ceramics are not coloured; no fluorescence is present in this case.

For a series of passive optical elements, possible fluorescence has to be suppressed in a targeted way. This can be guaranteed by the use of raw materials with especially high purity. According to an embodiment, the content of optically active impurities (for example active ions of the group of rare earths or transition metals) has to be reduced to a minimum. Preferably, this is < 100 ppm, further preferably < 10 ppm, particularly preferably < 1 ppm and most preferably, the opto-ceramics are free of these ions, such as Pr, Nd, Sm, Eu, Tb, Dy, Ho, Er, Tm.

According to an alternative embodiment, these ions may be added in amounts such that the optical activity (efficiency of the laser action) is impaired which applies to amounts of 15 % by mol or higher.

A prerequisite for that is that for the distinct application self-colour or fluorescence does not play a role. As long as this is the case, also further element oxides of the lanthanides series may be used, for example it may be supplemented with $Tb_2O_3$, $D_{y2}O_3$, $Er_2O_3$, $Ho_2O_3$, $Tm_2O_3$. The last mentioned oxides also form cubic phases as pure oxides.

$ZrO_2$ or $HfO_2$ may be added in distinct amounts to the a.m. oxides respectively oxide mixtures, as mentioned above. For example, these are up to 50 % by mol of $HfO_2$ or $ZrO_2$ in $Yb_2O_3$ or $Lu_2O_3$ respectively up to 40 % by mol of $HfO_2$ or $ZrO_2$ in $Sc_2O_3$ or $Y_2O_3$. Generally, the content of $ZrO_2$ should not exceed 55 % by mol.

$HfO_2$ is possible as raw material, e.g. incorporated via $ZrO_2$. $ThO_2$ is not suitable, because of toxicity respectively radioactivity.

The refractive index is noticeably increased by the use of $HfO_2$ and/or $ZrO_2$.

The optical properties, such as transparency, refractive number, Abbe number and partial dispersion can be adjusted to the respective needs by a suitable combination of the oxides.

Preferably, the refractive values of the opto-ceramics according to the present invention are in the range of 1.80 and 2.1, further preferably 1.85 and 2.05 and particularly preferably 1.89 and 2.02, die Abbe number is between 30 and 45, preferably 33 to 40, and the relative partial dispersion ($P_{g,F}$) is in the range of 0.560 and 0.580, preferably of 0.565 and 0.575.

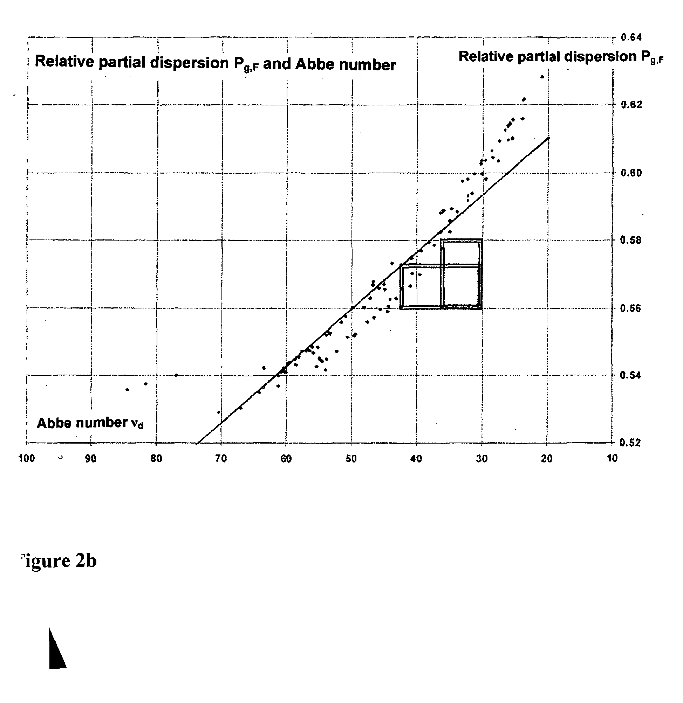

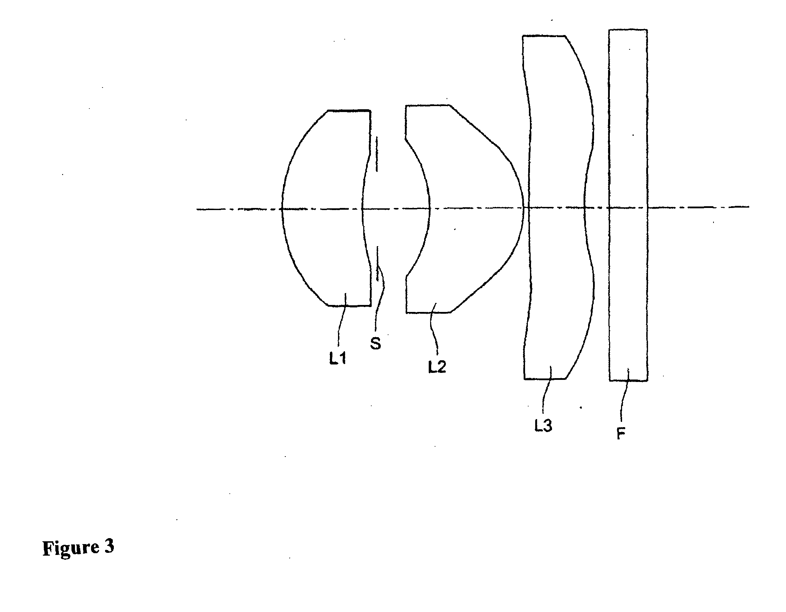

Fig. 3 shows a group of lenses which can for example be inserted into a compact objective of an electronic apparatus, such as for example a mobile phone. According to Fig. 3, the group of lenses comprises, from the side of the subject to the side of the image, a first lens L1, a lens aperture stop S, a second lens L2 and a third lens L3. Lens L1 has a positive refractive power and its convex surface is oriented to the side of the subject. The meniscus-shaped second lens L2 has a positive refractive power and its convex surface is oriented to the side of the subject. The third lens L3 has a negative refractive power and its concave surface is oriented to the side of the subject. The lens aperture stop S is arranged between the first lens L1 and the second lens L2 and substantially defines together with the diameter of the lenses the F number of the objective.

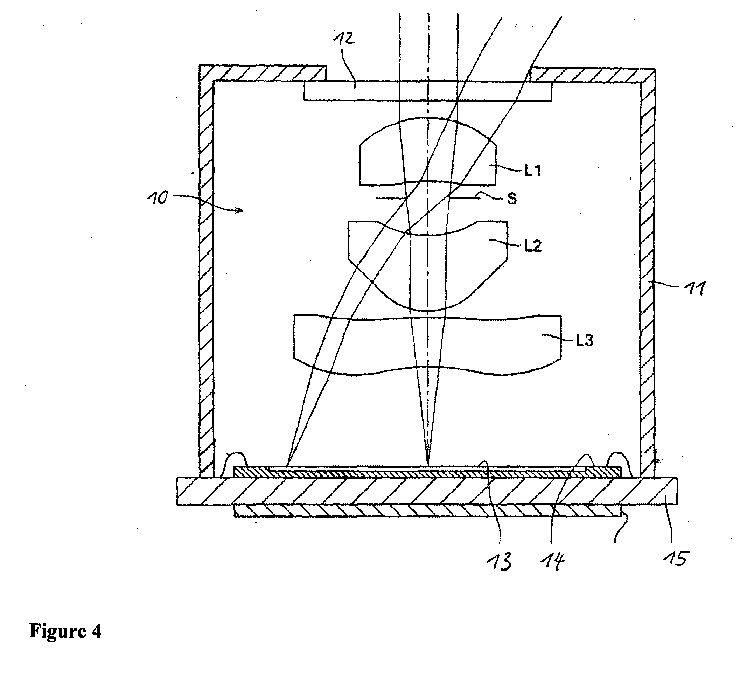

Fig. 4 shows a typical set-up of an objective, for example as a mapping optic for a mobile phone, with a group of lenses according to Fig. 3. In an embodiment example, the objective had an F number of 2.88 with a focal length of 3.789 mm and a total length of the facility (up to the photo chip) of 5.55 mm.

An additional use of the material according to the present invention is the use in infrared applications. Preferably, these materials have high transparency for wave lengths in the range of 800 nm up to 8,000 nm, but at least in the range of 800 up to 5,000 nm. Absolutely preferably, the optical elements according to the present invention may be lenses of an optical ceramic of the above mentioned type which lead to mapping of both, the visible light (ca. 380 nm to ca. 800 nm) and also thermal radiation (infrared) of up to 8,000 nm.

Applications for that are windows and lenses for so called "Forward looking Infrared" which are transmittive for infrared, for aeroplanes for antiballistic missile defence, cover crowns of antiballistic missiles for infrared wave lengths of up to 8,000 nm. In this case, it is particularly convenient that at the same time the material has high transmittance for both, visible and also infrared light. This facilitates uses in the field of defence.

Production of opto-ceramics of the type "$X_2O_3$"

1. Preparation of powder

The production of the opto-ceramic is effected by the use of suitable powders. Methods for that are (co) precipitations, flame hydrolysis, gas condensation, laser ablation, plasma spray methods (CVS processes), sol gel methods, hydrothermal methods, combustions etc. In view of high packing densities, the shape of the grain is preferably round-shaped respectively preferably spherical; the grains are only in loose contact with each other via van der Waals forces (soft agglomerates). Ideally, the grains are connected with each other via small bridges in the form of sintering necks. Regarding to chemical precipitation reactions, there is a high dependency of the grain fraction and grain shape of the precipitation conditions. Thus a broad spectrum of different starting powders may be produced by the selection of the precipitation medium (carbonate precipitation, hydroxide precipitation, oxalate precipitations) of an e.g. nitrate or chloride solution of e.g. Y nitrate respectively yttrium chloride. Powders having different qualities and starting properties (e.g. specific surface) may also be achieved by different drying methods of the filter cake (simple drying on air, lyophilization, azeotropic distillation). Furthermore, a great amount of additional parameters (pH value, rate of rotation of the stirrer, temperature, precipitation volume etc.) have to be considered during the precipitations.

The purity of the powder is a substantial criterion. Each impurity may result in changed sintering conditions or in inhomogeneous distribution of the optical properties. Impurities may lead to the formation of liquid phases which in worst case may result in broad inhomogeneous grain boundary regions. However the formation of intergranular phases (amorph or cryst.) should be avoided, because of this differences of the refractive value may be the result which in the case of light passage leads to scattering losses.

The use also of hard agglomerates, i.e. primary particles which have multiply formed bridges during the precipitation respectively the calcination respectively are "fused" together due to that in a more or less scope, is possible according to the choice of the method. So e.g. J. Mouzon describes in a published Licenciate Thesis "Synthesis of Yb:$Y_2O_3$ nanoparticles and Fabrication of Transparent Polycrystalline Yttria Ceramic", Lulea University of Technology, Int. No. 2005:29, that for the avoidance of intragranular pores, i.e. pores inside the grain, differential sintering is advantageous. This will be guaranteed by hard agglomerates, i.e. the primary particles within an agglomerate first are sintering into a dense state, wherein remaining pores are preferably located in the grain boundary region. Those could be removed from the structure by the method of "hot isostatic pressing".

Furthermore, in the production of (co)precipitated powders there is the possibility of reducing the tendency to agglomeration by the targeted addition of agents. So the necessity of a grinding process is avoided. For that, there is the possibility of adding $NH_4OH$ before the calcination of a precipitated oxalate suspension.

## 2. Conditioning of powder

The powders are processed in different ways due to the forming. Normally, the powder is ground with the aim a) to disintegrate yet present agglomerates and b) to homogenize the powders during the addition of additives. The grinding may be performed in dry or wet condition, with the latter being e.g. alcohols or media on water basis. The times of grinding may be up to 24 hours, but should be selected such that no abrasion of the grinding bodies ($Al_2O_3$, $ZrO_2$) respectively of the lining of the grinding drum can take place. Ring scission, Attritor, ball grinders etc. are suitable as grinding mills. As a medium for example water, liquid alcohols respectively liquid hydrocarbons, such as heptanes or others may be used.

The drying of the mixtures may again be carried out on air at low temperatures, wherein in the most convenient case the grinding suspension is dried by the means of spray drying. In this case, granules having defined size and quality can be produced. In the case of spray drying, the use of binders is recommended, wherein the spray drying preferably results in soft agglomerates. The size of the agglomerates should not exceed 100 $\mu$m, wherein agglomerates in the order of 10 to 50 $\mu$m are convenient and agglomerates < 10 $\mu$m are ideal. Also lyophilization or turbulent flow drying are possible.

Occasionally, also additives are required, if the nanopowder respectively the nanopowder agglomerate has to be pressed. For forming by casting, e.g. slip casting, pressure casting, centrifugal casting, the powder mixture has to be dispersed in suitable liquefiers. For that for example, Darvan, Dolapix, polyaryl acids, polyacrylic acids, ammonium oxalate monohydrate, oxalic acid, sorbite ammonium citrate or others are suitable.

For plastic forming (extruding, injection moulding, heat casting), organic binders of the type polyolefin, e.g. HOSTAMOND® of the company Clariant, or catalytically degrading binders, e.g. of the type CATAMOLD® of the company BASF, have to be introduced into the powder and have to be homogenized in suitable form.

## 3. Forming

Pressing allows a quick and cheap forming.
For slip casting, the use of moulds of gypsum is recommended.

## 4. Tempering steps

Vacuum sintering allows the removal of open porosity from the compact powder. The vacuum conditions are above $10^{-3}$ mbar (= $10^{-3}$ hPa), wherein preferably pressures between $10^{-5}$ and $10^{-6}$ mbar (= $10^{-5}$ and $10^{-6}$ hPa) are used. The sintering conditions vary according to the material, wherein for example regimes, such as T = 1,500°C to 1,800°C and sintering times of between 1 and 10 hours should be mentioned.

Alternatively, it can also be sintered in specific atmospheres (He, hydrogen (dry or wet), $N_2$, Ar).

In the case of vacuum sintering, it is important that the growth of the grains is not too fast and uncontrolled. The aim is, not to incorporate pores into the grains. For that, e.g. the sintering temperatures can be kept very low. Optionally, thereafter the sample is yet opaque due to the high pore density, but the pores are closed.

The closed porosity between the grain boundaries may be pressed out of the structure by a subsequent HIP process. Exemplary conditions are 1,500°C to 1,800°C, pressures between 100 MPa (1,000 bar) and 200 MPa (2,000 bar). Tempering times of between 1 and 10 hours (without heating and cooling time) are common. W or Mo, optionally also graphite may be used as a heating element.

Argon may be used as a pressure medium. The sample may be encapsulated respectively embedded in a powder of its own kind to avoid the solution of Ar in the grain boundaries, e.g. in glass-like intermediate phases.

By the latter, discolouration by reduction of material at the surface respectively contamination of the sample with constituents of the heating element which are inside the furnace chamber can be avoided, wherein thus "post tempering" on air is not necessary. If yet required, it should be conducted on air or in oxygen. Exemplary conditions are 1 to 48 hours at up to 1,400°C.

Intragranular fine porosity can also be reduced by a special process run. This is effected by targeted growth of the grains which takes place in such a manner that newly build grain boundaries "grow beyond" the region of the pore volume enclosed in the grain.

For that, the sample is again subjected to a sintering process after the HIP process.

Instead of vacuum sintering and the subsequent HIP process, also the combined process of "vacuum hot pressing" may be used.

Example

High purity $Y_2O_3$, $La_2O_3$ and $HfO_2$ powders were used as starting material. The powders were mixed with additives and binders and ball milled for 12 h in ethanol. Then, the alcohol solvent was removed by drying the milled slurry on a hot plate. The so-obtained powder was pressed with low pressure into required shapes in a metal mould and then cold isostatically pressed at 98 MPa.

Transparent $Y_2O_3$ ceramics were obtained after sintering under vacuum ($1 \times 10^{-3}$Pa) at 1700°C for 3h followed by hot isostatic pressing at 1780°C for 2h at a pressure of 196 Mpa in Ar atmosphere.

The Interaction of light with an optically transparent material is given by the addition of Reflection, Absorption, Scattering and specular transmission. The reflection losses are inherent to the material due to Snells law. The total amount of light emerging from a material is termed as "total transmittance", while its specularly transmitted portion is termed as in-line transmittance ($T_{in-line}$), after taking into account scattering as possible loss mechanism.

$$T_{in-line} = \frac{I_{in-line}}{I_0} = 10^{-\left(k_{in-line}\right)d}$$

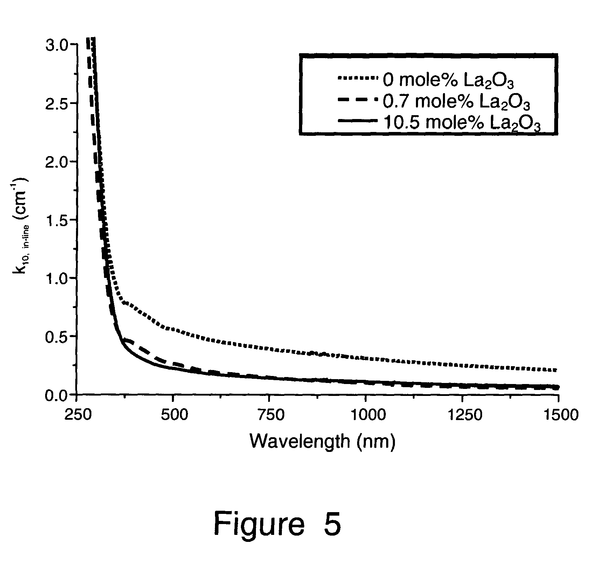

Where $I_{in-line}$ and $I_0$ are the specularly transmitted intensity leaving the sample and the incident intensity, respectively and $k_{in-line}$ is the absorption coefficient. A graphic representation can be seen from figure 5.

All prepared samples were transparent. The samples containing few to no $La_2O_3$ showed yellow discoloration. In figure 5 the linear absorption of $Y_2O_3$ opto-ceramics containing different amounts of $La_2O_3$ is shown. Clearly a broad absorption band at ~ 400nm is seen for the opto-ceramics containing 0 and 0.7 mole% $La_2O_3$. Surprisingly it was observed that a sample with ~ 10 mole % $La_2O_3$ does not show this yellow coloration, transmitting in the UV-Vis absorption diagram in not showing any absorption band in the visible.

Therefore $La_2O_3$ has been shown to promote transmission towards optical quality for lens applications.

**List of reference characters**

1    Biconvex lens
2    Biconcave lens
3    Substrate
4    Spherical lens

10    Image detection facility
11    Casing
12    Cover plate/IR filter
13    Photo sensor
14    Signal processing circuit
15    Support plate

**Claims**

1.  An opto-ceramic, consisting of a crystal combination, wherein the single crystallites have a cubic structure of the type $Y_2O_3$, comprising alternatively an oxide, selected from the group consisting of $In_2O_3$ or a mixture of two or more oxides of the type $X_2O_3$, wherein X is selected from the group consisting of Y, Lu, Sc, Yb, In, Gd and La, wherein the opto-ceramic is transparent for visible light and/or for infrared radiation.

2.  An opto-ceramic according to claim 1, wherein X in $X_2O_3$ is selected from Sc, In, Gd, or La.

3.  The opto-ceramic according to claim 1 and/or 2, wherein the oxides are mixtures of two oxides, selected from the group consisting of yttrium oxide with lutetium oxide , yttrium oxide with scandium oxide, yttrium oxide with indium oxide, lutetium oxide with scandium oxide, lutetium oxide with ytterbium oxide , lutetium oxide with indium oxide, lutetium oxide with gadolinium oxide, lutetium oxide with lanthanum oxide, scandium oxide with ytterbium oxide, scandium oxide with indium oxide, scandium oxide with gadolinium oxide, scandium oxide with lanthanum oxide, ytterbium oxide with indium oxide, ytterbium oxide with gadolinium oxide, ytterbium oxide with lanthanum oxide, indium oxide with gadolinium oxide, indium oxide with lanthanum oxide, yttrium oxide with ytterbium oxide, wherein ytterbium oxide is present in an amount of higher than 20 % by mol, yttrium oxide with gadolinium oxide, wherein gadolinium oxide is present in an amount of higher than 20 % by mol, yttrium oxide with lanthanum oxide, wherein lanthanum oxide is present in an amount of higher than 10 % by mol.

4. The opto-ceramic according to one or more of the preceding claims, further comprising $ZrO_2$ and/or $HfO_2$.

5. The opto-ceramic according to one or more of the preceding claims, wherein the refractive index is higher than or equal to 1.80, preferably in the range of between 1.85 and 2.05 and wherein the Abbe number is higher than 30 and preferably in the range of between 30 and 45.

6. The opto-ceramic according to one or more of the preceding claims, wherein the Abbe number is in the range of between 30 and 42 and wherein the relative partial dispersion is in the range of between 0.56 and 0.58.

7. The opto-ceramic according to one or more of the preceding claims, wherein three or more oxides are present as a mixture.

8. The opto-ceramic according to one or more of the preceding claims, wherein it is transparent for visible light.

9. The opto-ceramic according to one or more of the preceding claims, wherein it is transparent for infrared light.

10. The opto-ceramic according to one or more of the preceding claims, wherein it is transparent for both, visible light and also infrared light.

11. A refractive, transmittive or diffractive optical element, comprising an opto-ceramic as defined in one or more of the preceding claims 1 to 9.

12. Mapping optic with lenses of at least two different transparent materials, wherein at least one lens is formed as an optical element according to the preceding claim.

13. Mapping optic according to the preceding claim, wherein the lenses are only refractive.

14. Mapping optic according to claim 11, wherein at least one lens has diffractive structures.

15. Mapping optic according to one of claims 11 to 13, further comprising at least one lens of a glass.

16. Mapping optic according to one or more of the preceding claims, wherein the relative partial dispersions of the respective glass and the ceramic are approximately similar to one another, preferably with a difference of less than 10 %, and wherein the difference of the Abbe numbers of the respective glass and the ceramic is higher than 10.

17. Mapping optic according to one or more of the preceding claims, wherein the ceramic has a relative partial dispersion in the range of between 0.56 and 0.58 and an Abbe number in the range of between 30 and 40 and wherein the respective glass has a relative partial dispersion of between 0.555 and 0.585 and an Abbe number of lower than 45.

18. Mapping optic according to one or more of the preceding claims, wherein the glass is selected from a group consisting of N-BAF4, N-BaF10, N-SSK8, N-SSK5, N-KF9, LLF1, TiF1, TiF2 or glasses which are comparable with respect to their optical position.

19. Mapping optic according to one or more of the preceding claims, wherein the ceramic has a relative partial dispersion in the range of between 0.56 and 0.58 and an Abbe number in the range of between 30 and 40 and wherein the respective glass has a relative partial dispersion in the range of between 0.555 and 0.575 and an Abbe number of lower than 50.

20. Mapping optic according to one or more of the preceding claims, wherein the lenses are arranged to a compact objective having a predetermined focal length.

21. Mapping optic according to one or more of the preceding claims, wherein a first lens which is arranged on the side of the subject of the mapping optic is formed as a pure refractive lens.

22. Mapping object according to the preceding claim, wherein the first lens is a spherical lens.

(1)

(2)

(3)

(4)

**Figure 1**

**Figure 2a**

Figure 2b

**Figure 3**

Figure 4

Figure 5

**European Patent Office**

**EUROPEAN SEARCH REPORT**

Application Number

EP 07 01 1364

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | EP 1 775 273 A (KONOSHIMA CHEMICAL [JP]) 18 April 2007 (2007-04-18) * figure 1; examples; tables * | 1-3,5-11 | INV. C04B35/50 C04B35/505 |
| X | -& WO 2006/003726 A (KONOSHIMA CHEMICAL [JP]; HOSOKAWA SHUNSUKE [JP]; YAGI HIDEKI [JP]; YAN) 12 January 2006 (2006-01-12) * figure 1; examples; tables * | 1-3,5-11 | G02B1/00 G02C7/02 |
| X | DATABASE WPI Week 200631 Derwent Publications Ltd., London, GB; AN 2006-295039 XP002452725 -& CN 1 660 716 A (UNIV SHANGHAI) 31 August 2005 (2005-08-31) * abstract * | 1-3,5-11 | |
| X | DATABASE WPI Week 200662 Derwent Publications Ltd., London, GB; AN 2006-595678 XP002452726 -& CN 1 760 157 A (SHANGHAI INST SILICATE CAS) 19 April 2006 (2006-04-19) * abstract; figure 5 * | 1-3,5-11 | |
| | | | TECHNICAL FIELDS SEARCHED (IPC) |
| | | | C04B G02B G02C |
| X | JP 06 211573 A (KUROSAKI REFRACTORIES CO) 2 August 1994 (1994-08-02) * paragraph [0002]; tables 1,2 * | 1-3,5-11 | |
| X | US 4 147 744 A (RHODES WILLIAM H) 3 April 1979 (1979-04-03) * column 2, line 6 - line 34; table 1 * | 1-3,5-11 | |

-/--

The present search report has been drawn up for all claims

| Place of search | Date of completion of the search | Examiner |
|---|---|---|
| Munich | 25 October 2007 | Munro, Brian |

EPO FORM 1503 03.82 (P04C01)

**European Patent Office**

**EUROPEAN SEARCH REPORT**

Application Number

EP 07 01 1364

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DATABASE WPI Week 200355 Derwent Publications Ltd., London, GB; AN 2003-581197 XP002452724 -& JP 2003 128465 A (KAMISHIMA KAGAKU KOGYO KK) 8 May 2003 (2003-05-08) * abstract; figure 1; table 3 * | 1 | |
| A | EP 0 277 811 A (RAYTHEON CO [US]) 10 August 1988 (1988-08-10) * the whole document * | 1 | |
| A | GB 1 202 032 A (GEN ELECTRIC [US]) 12 August 1970 (1970-08-12) * claim 1; tables II,III * | 1,4 | |
| A | EP 0 263 662 A2 (GEN ELECTRIC [US]) 13 April 1988 (1988-04-13) * the whole document * | 1 | |
| X | JP 2006 091430 A (CASIO COMPUTER CO LTD) 6 April 2006 (2006-04-06) * abstract; figures * | 12-22 | TECHNICAL FIELDS SEARCHED (IPC) |
| X | JP 2006 091482 A (CASIO COMPUTER CO LTD) 6 April 2006 (2006-04-06) abstract and paragraph 12 | 12-22 | |
| X | US 2006/012885 A1 (BEDER SUSANNE [DE] ET AL) 19 January 2006 (2006-01-19) * paragraph [0020] * * paragraph [0070]; claim 35 * | 12-22 | |
| X | US 2006/061880 A1 (KAWAKAMI ETSURO [JP]) 23 March 2006 (2006-03-23) * claims; figures * | 12-22 | |

-/--

The present search report has been drawn up for all claims

| Place of search | Date of completion of the search | Examiner |
|---|---|---|
| Munich | 25 October 2007 | Munro, Brian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 01 1364

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 08 013140 A (HITACHI METALS LTD) 16 January 1996 (1996-01-16) * abstract; table 1 * ----- | 1 | |

TECHNICAL FIELDS SEARCHED (IPC)

The present search report has been drawn up for all claims

| Place of search | Date of completion of the search | Examiner |
|---|---|---|
| Munich | 25 October 2007 | Munro, Brian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 01 1364

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2007

| Patent document cited in search report | | Publication date | Patent family member(s) | | Publication date |
|---|---|---|---|---|---|
| EP 1775273 | A | 18-04-2007 | WO | 2006003726 A1 | 12-01-2006 |
| WO 2006003726 | A | 12-01-2006 | EP | 1775273 A1 | 18-04-2007 |
| CN 1660716 | A | 31-08-2005 | NONE | | |
| CN 1760157 | A | 19-04-2006 | NONE | | |
| JP 6211573 | A | 02-08-1994 | NONE | | |
| US 4147744 | A | 03-04-1979 | BE | 868860 A1 | 03-11-1978 |
| | | | CA | 1090376 A1 | 25-11-1980 |
| | | | DE | 2829996 A1 | 08-02-1979 |
| | | | FR | 2397379 A1 | 09-02-1979 |
| | | | GB | 2000758 A | 17-01-1979 |
| | | | IT | 1096861 B | 26-08-1985 |
| | | | JP | 54017911 A | 09-02-1979 |
| | | | NL | 7807227 A | 15-01-1979 |
| | | | US | 4115134 A | 19-09-1978 |
| JP 2003128465 | A | 08-05-2003 | JP | 3883106 B2 | 21-02-2007 |
| EP 0277811 | A | 10-08-1988 | CA | 1303825 C | 23-06-1992 |
| | | | JP | 5055465 B | 17-08-1993 |
| | | | JP | 63201061 A | 19-08-1988 |
| | | | US | 4761390 A | 02-08-1988 |
| GB 1202032 | A | 12-08-1970 | AT | 285419 B | 27-10-1970 |
| | | | BE | 703898 A | 01-02-1968 |
| | | | DE | 1646554 A1 | 26-08-1971 |
| | | | SE | 310860 B | 12-05-1969 |
| EP 0263662 | A2 | 13-04-1988 | DE | 3783700 D1 | 04-03-1993 |
| | | | DE | 3783700 T2 | 05-08-1993 |
| | | | JP | 63123813 A | 27-05-1988 |
| | | | US | 4755492 A | 05-07-1988 |
| JP 2006091430 | A | 06-04-2006 | NONE | | |
| JP 2006091482 | A | 06-04-2006 | NONE | | |
| US 2006012885 | A1 | 19-01-2006 | NONE | | |
| US 2006061880 | A1 | 23-03-2006 | JP | 2006084886 A | 30-03-2006 |
| JP 8013140 | A | 16-01-1996 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000203933 A
- US 6908872 A
- US 3640887 A
- US 3545987 A
- US 4761390 A
- US 4755492 A
- US 4098612 A
- US 4147744 A
- US 4571312 A
- US 4747973 A
- JP 2003128465 A
- WO 0603726 A
- US 2006061880 A
- US 2006062569 A

**Non-patent literature cited in the description**

- The properties of optical glass. Springer, 1995